Europäisches Patentamt

European Patent Office

Office européen des brevets

(19)

(11) **EP 0 773 429 B1**

(12) **FASCICULE DE BREVET EUROPEEN**

(45) Date de publication et mention
de la délivrance du brevet:
**08.08.2001 Bulletin 2001/32**

(51) Int Cl.$^7$: **G01C 19/56**

(21) Numéro de dépôt: **96402419.4**

(22) Date de dépôt: **13.11.1996**

(54) **Gyromètre à résonateur mécanique**

Gyrometer mit mechanischem Resonator

Mechanical resonator gyro

(84) Etats contractants désignés:
**AT BE CH DE DK ES FI FR GB GR IE IT LI LU MC
NL PT SE**

(30) Priorité: **13.11.1995 FR 9513391
20.06.1996 FR 9607670**

(43) Date de publication de la demande:
**14.05.1997 Bulletin 1997/20**

(73) Titulaire: **SAGEM S.A.
75116 Paris (FR)**

(72) Inventeurs:
• **Charcosset, Claude, c/o SFIM Industries
91300 Massy (FR)**
• **Bonjour, Christian
25115 Pouilley les Vignes (FR)**
• **Stepanski, Alexandre
91210 Draveil (FR)**
• **Marianneau, Gilles
25000 Besancon (FR)**
• **Bourquin, Roger
25000 Besancon (FR)**

(74) Mandataire: **Schrimpf, Robert et al
Cabinet Regimbeau
20, rue de Chazelles
75847 Paris cedex 17 (FR)**

(56) Documents cités:
**WO-A-93/05400          US-A- 5 001 940**

• **PATENT ABSTRACTS OF JAPAN vol. 014, no.
521 (P-1131), 15 Novembre 1990 & JP 02 218914
A (NEC HOME ELECTRON LTD), 31 Août 1990,**

**Description**

La présente invention est relative aux gyromètres à résonateurs mécaniques.

Le gyromètre proposé par l'invention permet en particulier la mesure simultanée de deux composantes de vitesse de rotation.

De nombreux gyromètres à résonateurs mécaniques de type diapason sont déjà connus.

Il a notamment été proposé, par exemple dans les demandes de brevet EP 298 651, EP 309 963 et EP 318 972 des gyromètres dont les résonateurs mécaniques sont en H et sont constitués de deux diapasons en U dont les jambages s'étendent de façon opposée et sont reliés par un élément central.

Les branches de ces résonateurs mécaniques en H sont excitées selon un mode vibratoire primaire dans le plan selon lequel ces résonateurs s'étendent, les vibrations qui sont engendrées par l'effet Coriolis et que l'on mesure étant perpendiculaires au plan des résonateurs.

Ces résonateurs en H ne permettent la mesure que d'une seule composante de vitesse angulaire.

D'autres structures de résonateurs mécaniques à branches vibrantes ont été proposées.

On connaît notamment des résonateurs mécaniques comportant quatre bras vibrants répartis en carré et s'étendant parallèlement à partir d'un socle commun, d'un même côté de celui-ci.

Ces résonateurs ne permettent également la mesure que d'une seule composante de vitesse angulaire.

En outre, la stabilité de leurs performances n'est pas pleinement satisfaisante pour certaines applications.

On connaît déjà, par JP-2-218 914, un résonateur mécanique permettant la mesure de deux composantes de vitesse de rotation.

Ce gyromètre comporte quatre bras vibrants répartis en croix. Ces bras sont excités selon des vibrations perpendiculaires au plan du résonateur. Les vibrations de ces bras dans le plan du résonateur sont détectées et permettent de connaître les composantes de la vitesse de rotation du gyroscope selon les deux axes de ces bras.

Mais ce type de structure de même que la précédente ne permet pas d'obtenir des performances suffisantes pour certaines applications.

Un but de l'invention est de proposer une structure de gyroscope à résonateur mécanique permettant la mesure de deux composantes de vitesse de rotation qui présente une grande fiabilité.

Elle propose à cet effet un gyromètre comportant un résonateur mécanique présentant une pluralité de bras s'étendant de façon coplanaire à partir d'un élément commun, des moyens pour l'excitation selon un mode primaire des bras selon des vibrations en flexion perpendiculaires au plan de ce résonateur, des moyens pour la détection des vibrations secondaires en flexion engendrées par effet Coriolis sur les bras de ce résonateur dans le plan de celui-ci, ainsi que des moyens de traitement recevant des signaux de mesure en sortie des moyens de détection et déterminant en fonction de ces mesures des composantes dans le plan du résonateur de la vitesse de rotation du résonateur, caractérisé en ce que ledit résonateur comporte au moins six bras répartis en étoile selon au moins trois directions.

Avec une telle structure de gyromètre, on dispose en sortie des moyens de détection de trois mesures pour déterminer deux paramètres et par conséquent d'une information redondante qui permet d'assurer la fiabilité des déterminations que l'on réalise.

Avantageusement, notamment, les moyens de traitement comportent des moyens pour combiner linéairement les mesures en sortie des moyens de détection et traiter la combinaison linéaire ainsi obtenue pour délivrer un signal de contrôle de fonctionnement du gyromètre.

Un autre but est de proposer une structure de résonateur présentant une excellente stabilité des performances.

Avantageusement, à cet effet le résonateur mécanique est monolithique et est en un matériau monocristallin intrinsèquement piézo-électrique.

D'autres caractéristiques et avantages de l'invention ressortiront encore de la description qui suit. Cette description est purement illustrative et non limitative. Elle pourra être lue en regard des dessins annexés sur lesquels :

- la figure 1 est une vue en perspective d'un résonateur mécanique d'un gyromètre conforme à un mode de réalisation possible de l'invention ;
- la figure 2 est une vue en perspective avec arraché d'un gyromètre comprenant un résonateur du type de celui de la figure 1 ;
- les figures 3a et 3b illustrent un exemple d'orientation du résonateur par rapport aux axes optique et électrique du cristal dans lequel il est réalisé (cas du quartz) ;
- les figures 4a à 4c illustrent un exemple de configuration possible pour les électrodes ;
- les figures 5a et 5b illustrent un montage électrique possible pour les électrodes de détection de la configuration des figures 4a à 4c ;
- la figure 6 illustre un montage possible pour les électrodes d'excitation de la configuration des figures 4a à 4c ;
- les figures 7a et 7b illustrent un autre exemple de configuration possible pour les électrodes ;

- la figure 8 illustre la décomposition des vibrations primaires et secondaires sur les différents bras du résonateur ;
- la figure 9 est un exemple de montage électrique pour le traitement des mesures des vibrations secondaires ;
- les figures 10 et 11 sont des représentations schématiques en coupe illustrant deux autres variantes de réalisation possibles pour le gyromètre proposé par l'invention ;
- les figures 12 et 13 représentent respectivement en perspective et en vue de dessus deux variantes de résonateurs encore possibles pour l'invention ;
- les figures 14a et 14b illustrent les vibrations primaires et secondaires des bras du résonateur de la figure 13 ;
- la figure 15 est une vue en coupe axiale illustrant un mode de fixation possible pour les résonateurs des figures 12 et 13.

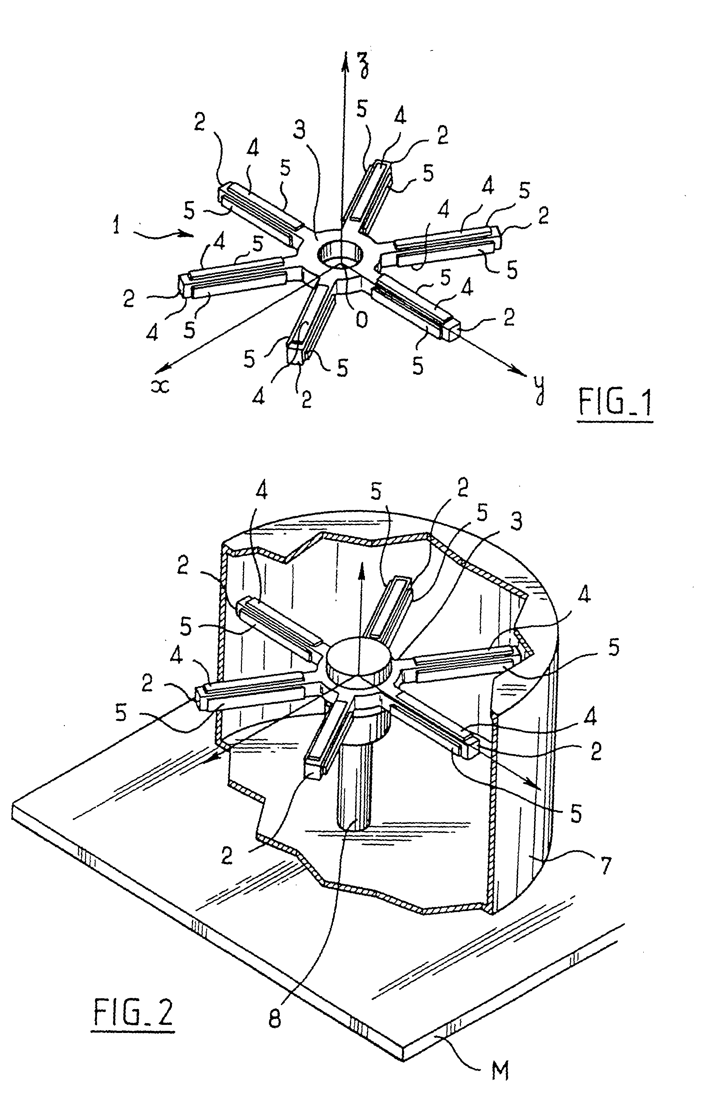

Le résonateur 1 illustré sur les figures 1 et 2 comprend au moins six bras 2 répartis en étoile de façon coplanaire selon au moins trois directions distinctes. Ces bras 2 s'étendent à partir d'un élément commun 3 par rapport à l'axe duquel ils s'étendent radialement en étant répartis régulièrement autour dudit axe.

Dans les différents exemples qui seront décrits dans la suite du présent texte, l'élément commun 3 est un noyau central autour duquel les bras 2 s'étendent radialement. D'autres géométries pourraient bien entendu être envisagées pour l'élément commun. Notamment, celui-ci peut être un anneau, les différents bras s'étendant radialement en son intérieur.

Les bras 2 sont excités en flexion par effet piézo-électrique selon un mode vibratoire de résonance perpendiculaire au plan général selon lequel lesdits bras 2 s'étendent (vibration primaire).

Une rotation selon un axe situé dans le plan des bras 2 du résonateur 1 engendre sur ces bras 2, par effet Coriolis, une vibration en flexion (dite secondaire) dans le plan desdits bras 2. Cette vibration est également mesurée par effet piézo-électrique, les mesures ainsi relevées étant traitées de façon à fournir les deux composantes de vitesse de rotation recherchées.

Les bras 2 sont avantageusement un nombre multiple de six.

Sur les figures 1 et 2, les bras 2 sont au nombre de six, deux bras 2 voisins étant angulairement espacés de 60°. Une telle structure à six bras en étoile permet un équilibrage des forces d'inertie primaires et secondaires.

Les moyens d'excitation sont constitués par des paires d'électrodes 4 déposées sur les bras 2, ainsi que par des moyens pour appliquer à ces électrodes 4 des tensions de commande destinées à induire les vibrations primaires desdits bras 2.

De même, les moyens pour la mesure des vibrations secondaires comprennent des électrodes 5 déposées sur les bras 2, ainsi que des moyens pour recueillir la tension piézo-électrique produite sur ces électrodes 5 par les vibrations secondaires engendrées sur les bras 2.

Les électrodes 4 et 5 sont réalisées par métallisation totale ou partielle des faces des bras 2 selon des géométries de dépôt permettant l'excitation et la détection souhaitées. Comme on l'aura compris, la représentation des électrodes 4 et 5 sur les figures 1 et 2 est purement schématique. Des exemples de configurations avantageuses d'électrodes seront décrits plus loin de façon plus détaillée.

Les bras 2 sont tous identiques aux imperfections de réalisation près. De façon que les fréquences propres de flexion soient sensiblement les mêmes pour les vibrations primaires et secondaires, ces bras 2 présentent une section de forme voisine du carré qui tient compte des raideurs d'encastrement différentes ainsi que des corrections d'anisotropie.

Si nécessaire, les fréquences propres des modes primaires et/ou secondaires peuvent être ajustées.

A cet effet, on peut jouer sur des masselottes d'équilibrage, par exemple disposées au voisinage des extrémités des bras 2. Ces masselottes sont par exemple constituées par des dépôts métalliques sur les différentes faces des bras 2, sur lesquels on vient, lors de l'équilibrage, enlever une certaine quantité de métal par attaque laser, de façon à obtenir les fréquences souhaitées pour les modes primaires et/ou secondaires.

Dans un mode de réalisation avantageux, le résonateur 1 présente une structure monolithique et est en un matériau monocristallin intrinsèquement piézo-électrique, par exemple en un cristal à symétrie ternaire tel que le quartz.

Bien entendu, tout autre matériau piézo-électrique conviendrait, par exemple une céramique piézo-électrique.

En variante encore, le résonateur peut être une pièce en métal sur laquelle sont rapportés des éléments piézo-électriques.

Le quartz et de façon plus générale tous les matériaux monocristallins présentent toutefois l'avantage d'être très stables dans le temps et en fonction de la température.

Préférentiellement, dans le cas du quartz, la structure en étoile est découpée par photolithographie et usinage chimique d'une plaque mince de quartz.

On notera que les techniques de photolithographie et d'usinage chimique permettent une grande précision d'usinage, ainsi qu'une bonne reproductibilité des formes géométriques, et notamment une grande qualité et reproductibilité des encastrements des différents bras,

Egalement, ces techniques permettent de réaliser plusieurs résonateurs sur un même substrat de quartz et permettent donc des prix de fabrication relativement réduits.

Elles permettent également d'intégrer la séquence de réalisation des électrodes 4 et 5 dans le procédé de fabrication du résonateur.

Le noyau central 3 est par exemple un disque. D'autres formes, notamment des formes polygonales, conviendraient également.

Notamment, pour respecter la symétrie ternaire du quartz et permettre d'accéder à de grandes précisions d'usinage, le noyau 3 est avantageusement de forme hexagonale.

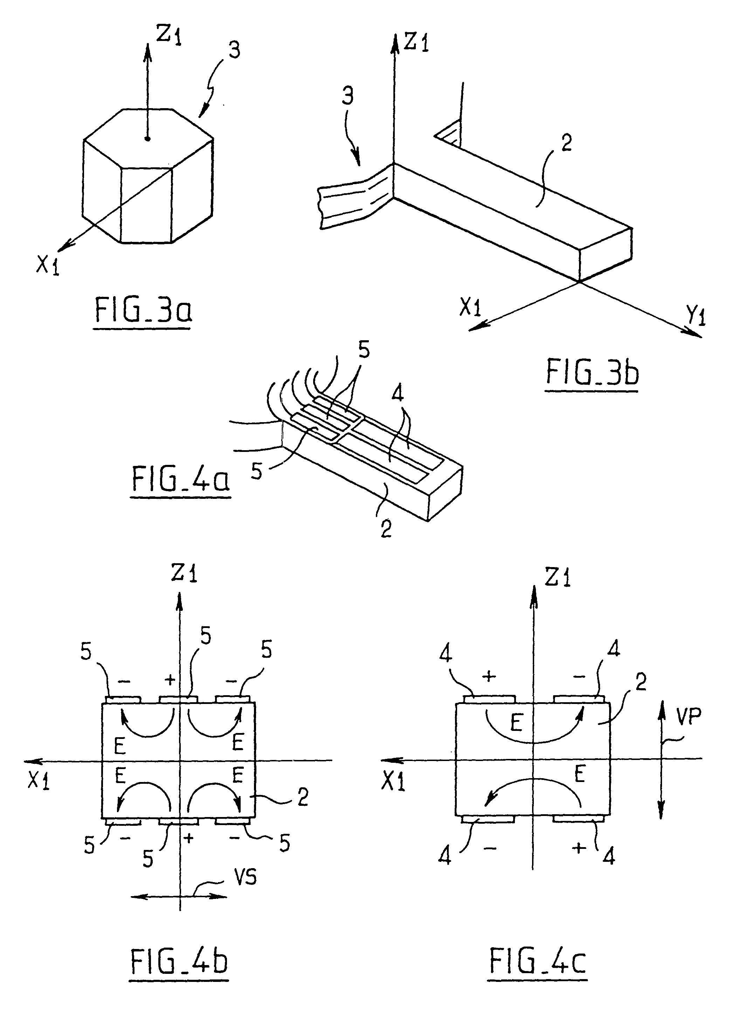

On a illustré sur la figure 3a l'axe optique Z1 et les axes électriques X1 d'un cristal de quartz.

Avantageusement, la structure du résonateur 1 est telle que l'axe optique Z1 est perpendiculaire à son plan principal, tandis que les axes électriques X1 sont perpendiculaires aux directions Y1 selon lesquelles les bras 2 s'étendent (figure 3b).

Une telle configuration permet une optimisation du signal de mesure.

On a représenté sur les figures 4a à 4c un exemple de configuration possible pour les électrodes d'excitation et de détection 4 et 5. Les doubles flèches Vp et Vs sur les figures 4b et 4c schématisent les vibrations secondaires et primaires.

Dans cet exemple, les électrodes 4 et 5 sont disposées sur les faces des bras 2 qui sont parallèles au plan du résonateur 1.

Chacune de ces faces porte trois électrodes de détection 5 qui s'étendent parallèlement sur une première portion dans la longueur du bras 2, en étant juxtaposées dans la largeur de celui-ci. Pour chacune de ces faces, on mesure les tensions entre l'électrode 5 centrale et les électrodes 5 latérales, qui correspondent aux champs électriques E générés par les vibrations de Coriolis.

Chacune de ces faces porte également sur une deuxième portion dans la longueur du bras 2 deux électrodes 4 parallèles entre lesquelles l'excitation génère des lignes de champ électriques E qui produisent les vibrations du bras 2 dans la direction perpendiculaire au plan du résonateur.

Cette disposition, qui ne fait intervenir qu'une métallisation des faces des bras parallèles au plan du résonateur, présente l'avantage d'être d'une réalisation aisée.

On notera sur la figure 4a que les électrodes de détection 5 sont situées à proximité immédiate de l'encastrement de leur bras 2 sur l'élément commun que constitue le noyau 3, c'est à dire au niveau du siège des contraintes maximales. Cette configuration permet de disposer d'un signal de mesure optimum.

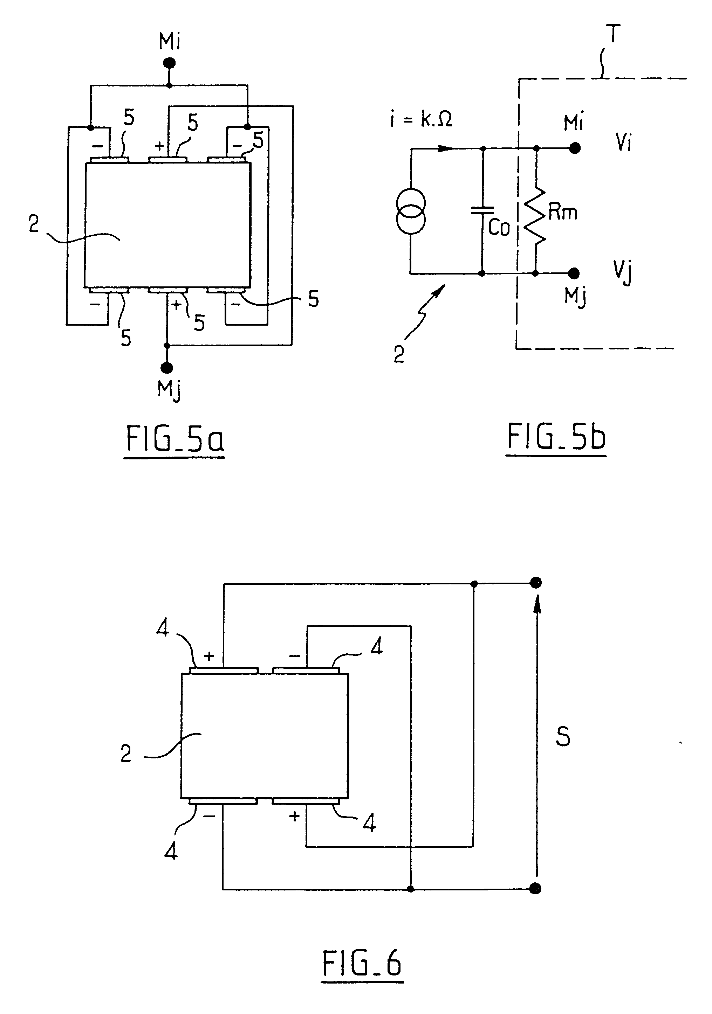

On a illustré sur les figures 5a et 5b un montage électrique possible pour les électrodes de détection 5.

Ainsi qu'on peut le voir sur ces figures 5a et 5b, la tension mesurée en sortie d'un bras 2 est une différence de potentiel Vi - Vj mesurée aux bornes d'une résistance Rm montée en parallèle entre d'une part les électrodes 5 centrales reliées entre elles (point Mj) et d'autre part les électrodes 5 latérales également reliées entre elles (point Mi).

Comme on l'a illustré sur la figure 5b, le bras 2 se comporte en détection comme un générateur de courant en parallèle avec une capacité Co.

Le courant i est proportionnel à la vitesse angulaire $\Omega$ projetée sur l'axe du bras 2 (i = k.$\Omega$).

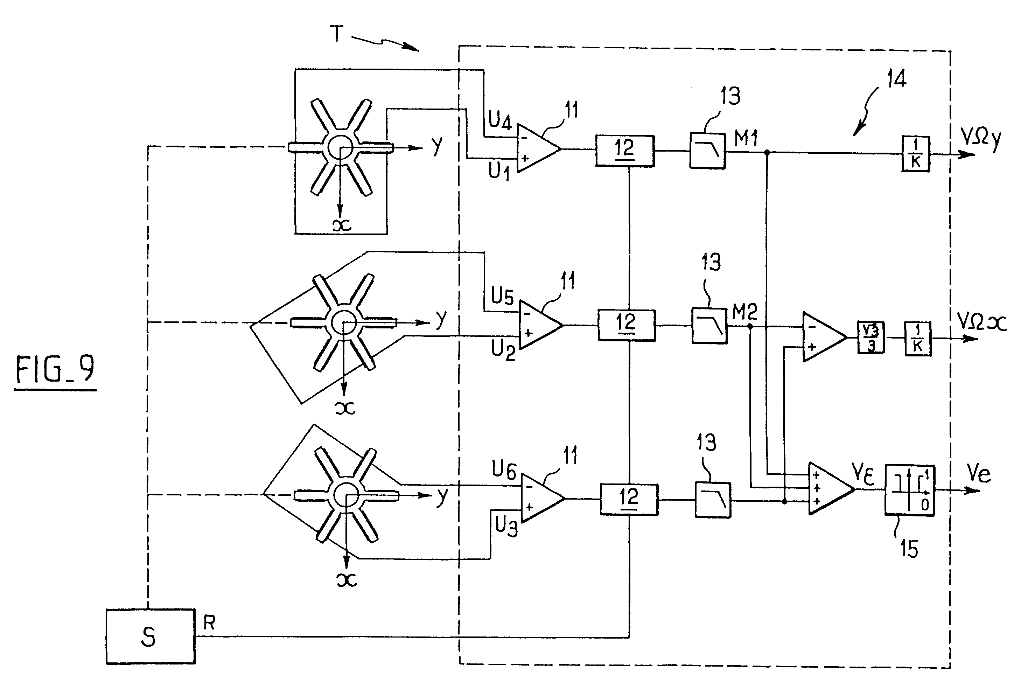

La résistance Rm fait partie de l'électronique de traitement T qui sera décrite dans la suite du présent texte en référence à la figure 9. Cette résistance Rm permet de convertir le courant i en une tension U (Vj - V$_i$) traitée par ladite électronique de traitement T.

La figure 6 illustre un montage d'excitation possible. On voit sur cette figure que pour générer le champ E d'excitation, une tension d'excitation S est appliquée entre deux électrodes 4 en regard et une tension d'excitation inverse est appliquée entre les deux autres électrodes 4.

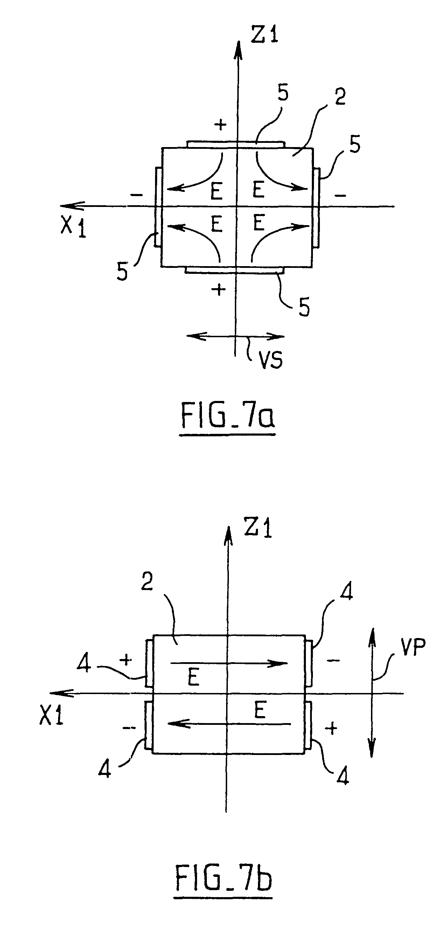

On a illustré sur les figures 7a et 7b un autre exemple de disposition possible pour les électrodes sur un bras 2.

Les électrodes de détection 5 sont au nombre de quatre et sont portées chacune par l'une des faces du bras 2. On mesure les tensions entre les électrodes 5 sur les faces du bras 2 parallèles au plan du résonateur et les électrodes 5 sur les faces perpendiculaires.

Les électrodes d'excitation 4 sont au nombre de quatre et sont portées deux par deux par les faces du bras 2 perpendiculaires au plan du résonateur 1.

Des tensions d'excitation sont appliquées entre les électrodes 4 en regard.

Cette disposition d'électrodes permet un meilleur rendement de polarisation.

Bien entendu, de nombreuses autres configurations sont envisageables. Notamment, il est possible de combiner les électrodes d'excitation et de détection des figures 4a à 4c et celles des figures 7a et 7b.

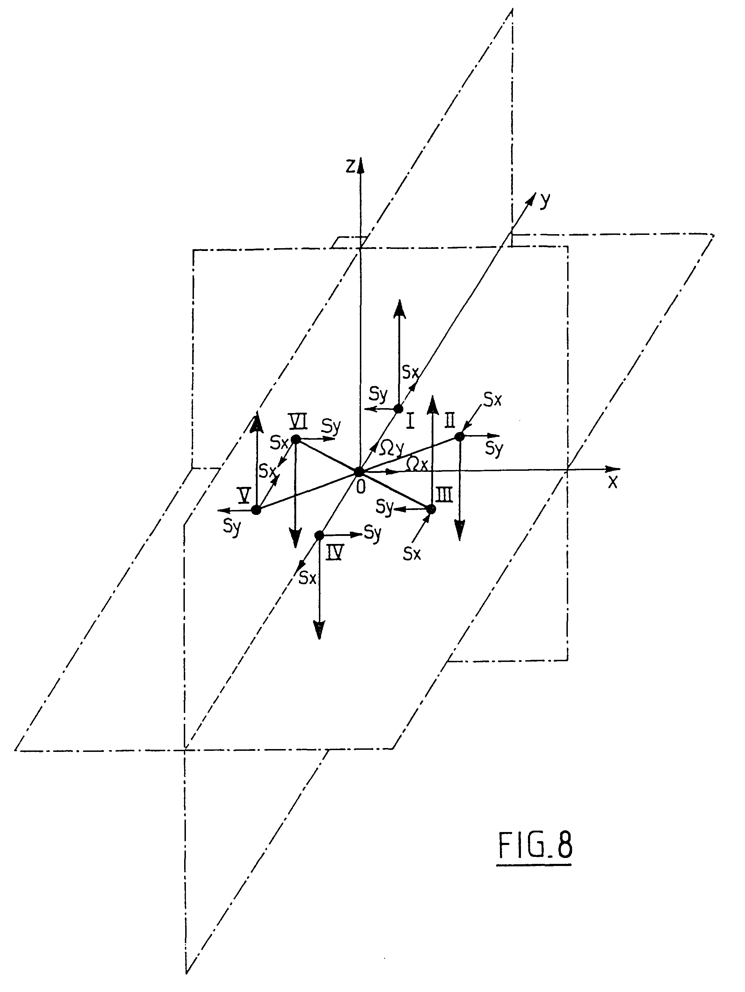

On se réfère maintenant à la figure 8 sur laquelle on a représenté schématiquement par leurs axes I à VI les six bras du résonateur 1.

On a également porté sur cette figure 8 ainsi que sur la figure 1 les axes Ox, Oy, Oz d'un référentiel lié au mobile M. Pour simplifier la présentation, l'axe Oy a été choisi confondu avec les axes I et IV. Bien entendu, les axes sur lesquels on cherche à déterminer les composantes de la vitesse de rotation peuvent être différents de ceux illustrés sur les figures.

Les vibrations d'excitation des différents bras 2 ont été symbolisées sur la figure 8 par des grandes flèches.

Les bras 2 sont excités à leur fréquence propre de flexion. Les électrodes d'excitation 4 sont à cet effet commandées par des tensions sinusoïdales qui sont toutes de même fréquence.

De façon générale, lorsque le nombre de bras 2 du résonateur 1 est pair, ces bras sont excités de façon que deux bras adjacents vibrent en opposition de phase. Ce mode de vibration permet en effet de conférer à la structure une grande insensibilité aux contraintes extérieures sur son noyau central.

Les tensions sinusoïdales sont par exemple délivrées par une même source S (voir figure 9).

Sous l'effet d'une vitesse de rotation $\Omega$ quelconque, les composantes $\Omega x$ et $\Omega y$ de la vitesse de rotation $\Omega$ sur les axes Ox et Oy génèrent respectivement par effet Coriolis dans chacun des bras des vibrations secondaires Sx et Sy.

Les composantes Sx engendrées par la composante $\Omega x$ sont parallèles à Oy.

Les composantes Sy engendrées par la composante $\Omega y$ sont parallèles à Ox.

Par contre, étant donné que les vibrations primaires des bras 2 sont parallèles à l'axe Oz, la composante $\Omega z$ de la vitesse de rotation $\Omega$ sur l'axe Oz n'introduit aucun effet dû aux forces de Coriolis.

On sait en effet que dans le cas d'une poutre encastrée, l'amplitude ys d'une vibration secondaire induite par effet Coriolis est donnée par la formule suivante :

$$ys/yp = 2 \times \frac{\Omega}{\omega p} \times \frac{1}{\sqrt{\left(1 - \frac{\omega p^2}{\omega s^2}\right)^2 + \left(\frac{\omega p}{\omega s} \times \frac{1}{Qs}\right)^2}}$$

où $\omega p$ est la pulsation du mode de résonance de la vibration primaire, $\omega s$ la pulsation de résonance de la vibration secondaire,

Qs le facteur de qualité du résonateur (dépendant notamment de la géométrie de la structure, du matériau et du gaz du milieu ambiant du résonateur),

yp l'amplitude de la vibration primaire et

$\Omega$ la composante de la vitesse de rotation projetée sur l'axe du barreau considéré.

Soit, dans le cas où $\omega p, \omega s$ et Qs sont très supérieurs à 0 et où $\omega p$ et $\omega s$ sont proches :

$$ys/yp \approx \frac{\Omega}{|\omega s - \omega p|}$$

Les vibrations secondaires engendrent par effet piézo-électrique à travers les électrodes 5 des différents bras 2 un courant i qui est proportionnel à ys, donc à $\Omega$.

Ces courants i sont transformés, par exemple par des montages du type de celui illustré à la figure 5b, en des tensions $U_1$ à $U_6$, qui sont représentatives des composantes $\Omega x$ et $\Omega y$.

On constate sur la figure 8 que les vibrations Sx sont deux à deux directement opposées, tandis que les vibrations Sy forment trois couples dont l'un s'oppose aux deux autres.

Les tensions $U_1$ à $U_6$ sont traitées, par exemple par des moyens de traitement T représentés schématiquement sur la figure 9, pour fournir les valeurs des composantes $\Omega x$ et $\Omega y$.

Les moyens de traitement T comportent en particulier trois amplificateurs opérationnels 11 recevant chacun en entrée la différence entre la tension $U_1$ à $U_6$ relevée sur l'un des bras 2 et la tension relevée sur le bras diamétralement opposé.

Les sorties de ces amplificateurs 11 sont démodulées (démodulateurs 12) et filtrées (filtres 13), de façon à fournir des tensions M1, M2 et M3 continues

Les composantes Sx, Sy des vibrations secondaires sont des fonctions quasi linéaires des composantes de vitesse $\Omega x$, $\Omega y$.

Pour déterminer les composantes dans le plan du résonateur 1 de la vitesse de rotation, les moyens de traitement T réalisent une combinaison linéaire sur les mesures M1, M2 et M3 en sortie des moyens de détection (sortie des filtres 13).

Les trois mesures M1, M2 et M3 ainsi obtenues sont telles que :

$$\Omega x = \frac{M_3 - M_2}{K} \times \frac{\sqrt{3}}{3} \qquad\qquad (a)$$

$$\Omega y = \frac{M_1}{K} \qquad\qquad (b)$$

$$M_1 + M_2 + M_3 = 0 \qquad\qquad (c)$$

où K est un facteur d'échelle propre au capteur.

On utilise les égalités (a) et (b) pour déterminer les deux composantes $\Omega x$ et $\Omega y$. L'égalité (c) permet un contrôle permanent du bon fonctionnement du gyromètre.

Les moyens de traitement T comportent par conséquent des moyens de sommation et de multiplication référencés par 14 dans leur ensemble pour la combinaison linéaire des mesures M1, M2 et M3. Les sorties de ces moyens 14 fournissent des tensions $V_{\Omega x}$ et $V_{\Omega y}$ correspondant aux deux composantes de vitesse $\Omega x$ et $\Omega y$. Elles fournissent en outre une tension $V_\varepsilon$ correspondant à la somme des mesures M1, M2, M3. Cette tension $V_\varepsilon$ est envoyée sur l'entrée d'un comparateur 15 qui fournit un signal d'erreur $V_e$ lorsque cette tension $V_\varepsilon$ est supérieure à un seuil donné.

Le résonateur 1 est fixé à l'intérieur d'un boîtier 7 qui, selon l'application à laquelle le gyromètre est destiné, peut être rempli d'un gaz inerte sous une certaine pression.

De façon avantageuse, au moins une partie des moyens de traitement qui viennent d'être décrits est disposée avec le résonateur 1 dans le boîtier 7.

Dans la variante de réalisation illustrée sur les figures 1 et 2, le résonateur 1 est fixé sur le boîtier 7 par l'intermédiaire d'un axe 8 lui-même fixé sur le fond dudit boîtier. Cet axe 8 constitue ainsi un pied de fixation dont le noyau central 3 est rigidement solidaire.

D'autres modes de fixation sont bien entendu envisageables.

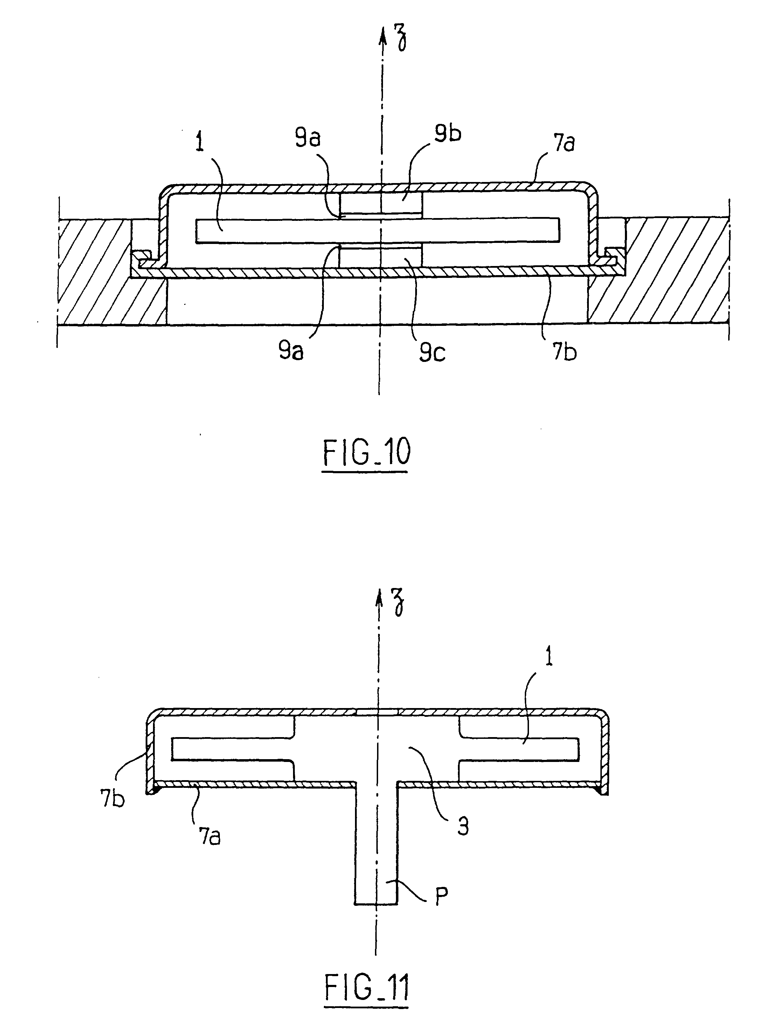

On a représenté schématiquement sur la figure 10 un mode de réalisation dans lequel le noyau central 3 est pincé entre deux couches 9a élastiquement déformables portées l'une par une rondelle 9b fixée sur la partie supérieure du boîtier 7 (demi boîtier supérieur 7a), l'autre par une rondelle 9c portée par le fond du boîtier 7 (demi boîtier inférieur 7b). Les couches 9a sont par exemple des couches minces en un élastomère, ou en une résine polymère.

Cette structure permet de découpler le résonateur 1 par rapport au boîtier 7.

Dans le mode de réalisation illustré sur la figure 11, le résonateur 1 est d'une pièce avec un pied de fixation P qui traverse le fond du boîtier 7 et est directement fixé sur le mobile M.

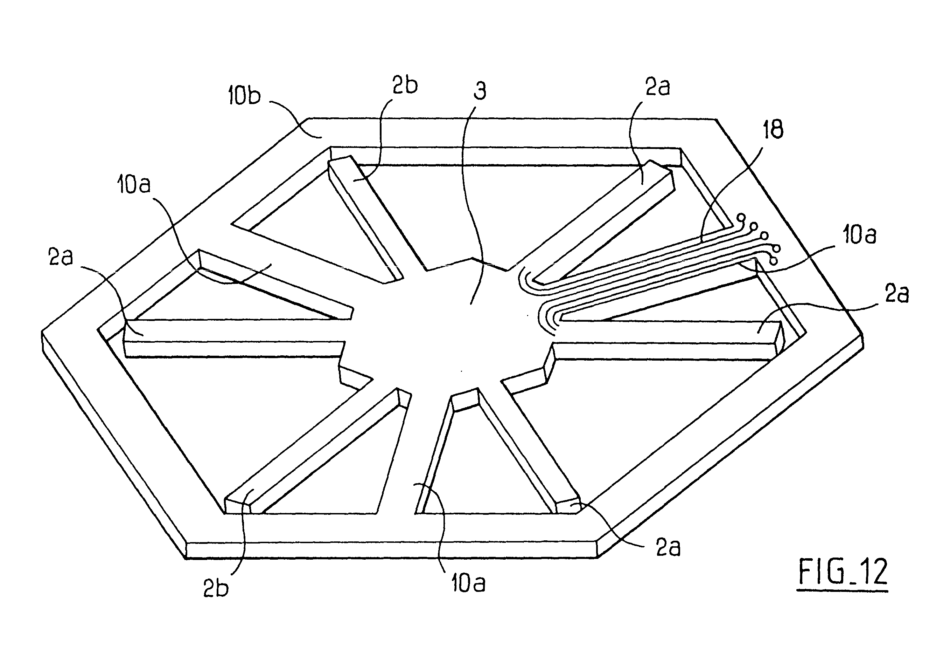

On a illustré sur les figures 12 à 15 d'autres modes de réalisation possible pour le gyromètre conforme à l'invention.

Dans ces modes de réalisation, le noyau central 3 se prolonge par plusieurs poutres 10a qui s'étendent radialement dans le plan du résonateur 1 jusqu'à une structure de fixation 10b qui entoure les bras 2 et le noyau 3.

Cette structure lOb est d'une pièce avec les poutres 10a, le noyau 3 et les bras 2.

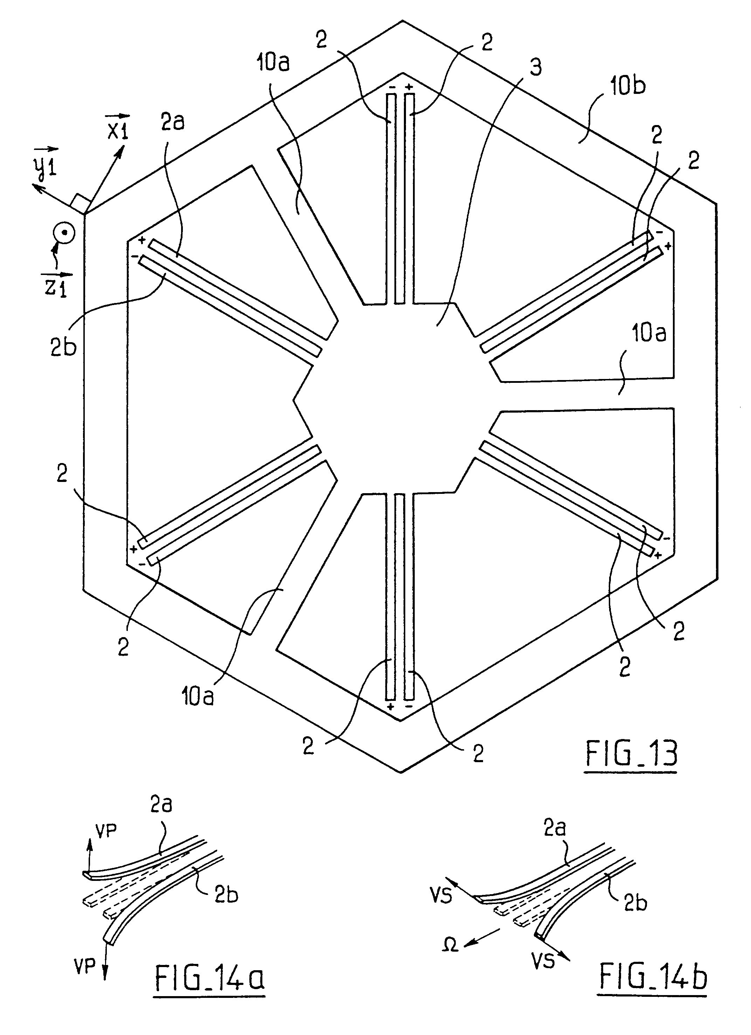

Dans les deux exemples de réalisation représentés sur les figures 12 et 13, les bras 2 s'étendent selon trois directions par rapport au noyau 3 et la structure de fixation 10b est préférentiellement hexagonale. Le nombre des poutres 10a est compris entre deux et six, ces poutres 10a étant régulièrement réparties autour du noyau 3.

On notera que dans le mode de réalisation illustré sur la figure 13, les bras 2 sont au nombre de douze et sont répartis selon trois directions en s'étendant par paires autour du noyau 3.

Une telle configuration permet de doubler les signaux en sortie.

On a illustré sur les figures 14a et 14b les vibrations VP et VS primaires et secondaires de deux bras 2 juxtaposés de la structure de la figure 13.

Dans tout ce qui précède, on s'est principalement placé dans le cas d'un matériau de symétrie ternaire, tel que le quartz. D'autres symétries pourraient être envisagées : symétrie quarternaire et de façon plus générale toute symétrie d'ordre n, avec n entier supérieur ou égal à 3.

Les bras s'étendent alors selon n directions, qui sont de préférence perpendiculaires aux axes électriques dans le cas d'un monocristal.

Par exemple, le résonateur comportera 2p bras dans chaque direction, avec p entier, les bras étant équi-répartis.

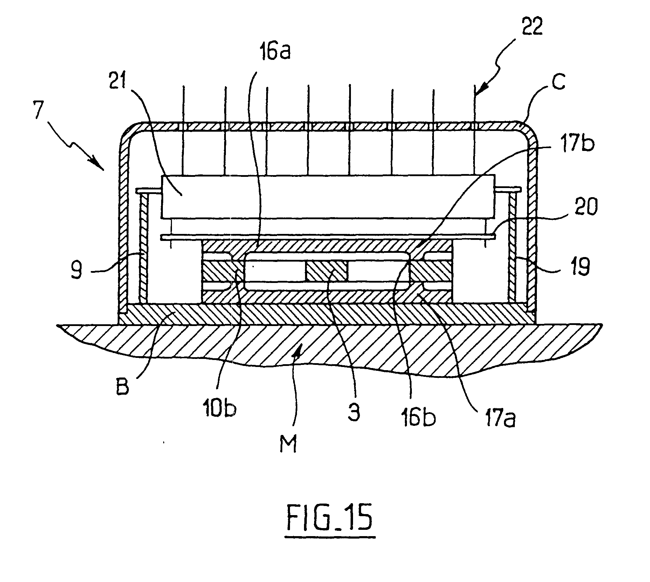

La figure 15 illustre un mode de fixation possible pour les résonateurs des figures 12 à 14a, 14b dans un boîtier 7.

La structure de fixation 10b est pincée entre des saillies 16a, 16b que présentent deux plaques 17a, 17b disposées de part et d'autre du résonateur 1. Ces saillies 16a, 16b permettent de dégager la partie vibrante du résonateur, c'est à dire le noyau 3 et les bras 2.

Les plaques 17a, 17b sont fixées sur une embase B par des moyens qui n'ont pas été représentés sur la figure 15.

Le boîtier 7 est défini par ladite embase B et un capot C rapporté sur celle-ci. L'embase B constitue le fond du boîtier et sert au positionnement et à la fixation du gyromètre 1 sur un mobile M.

Les deux plaques 17a et 17b et l'embase B sont usinées dans des matériaux dont le coefficient de dilatation est proche du matériau dans lequel est usiné le résonateur 1.

Celle - 17b - des deux plaques 17a, 17b qui est la plus éloignée de l'embase B, porte un circuit imprimé 20 qui relie les pistes électriques du détecteur résonant 1 à une unité électronique de traitement 21 qui intègre les moyens T.

L'unité 21 est fixée sur l'embase B par l'intermédiaire de colonnettes 19. Elle est reliée électriquement à l'extérieur par des bornes étanches 22 qui traversent le capot C.

Les liaisons électriques entre les électrodes 4, 5 et l'unité de traitement 14 via le circuit imprimé 20 utilisent des pistes métallisées 18 déposées sur le noyau 3, les bras 2 et la structure de fixation 10b du résonateur (figure 12).

Dans la structure de gyromètre conforme aux variantes qui viennent d'être décrites en référence aux figures 12 à 15, le nombre de pièces est réduit. L'assemblage de ce gyromètre est donc simplifié et les risques d'instabilité sont également réduits.

Par ailleurs, ce montage permet un bon découplage de la structure résonnante par rapport au support.

En outre, cette configuration confère au noyau 3 une grande souplesse dans une direction perpendiculaire au plan du résonateur, ce qui permet de générer les vibrations primaires par couplage des différents bras 2 entre eux.

Par exemple, ainsi qu'on l'a illustré sur la figure 12, on excite par une tension commune trois bras 2a séparés angulairement deux à deux de 120°. Les autres bras - référencés par 2b - vibrent automatiquement par couplage au mode de vibration désiré et sont utilisés pour la détection.

En variante, la vibration des différents bras 2 du résonateur pourrait être générée par l'excitation d'un seul bras 2.

L'avantage de ce type de fonctionnement est la simplification de la métallisation, ainsi que des connexions internes. Les électrodes de détection ou d'excitation s'étendent en effet dans ce cas sur pratiquement toute la longueur des bras qui les portent.

Bien entendu, le principe du couplage qui vient d'être décrit peut être appliqué à une structure du type de celle illustrée sur la figure 13. Pour deux bras 2 juxtaposés s'étendant parallèlement, l'un (2a) des bras est réservé à l'excitation, l'autre (2b) à la détection.

A titre d'exemple de dimensionnement, les bras 2 peuvent avoir une longueur de 5 mm et une section droite sensiblement carrée dont les côtés seront voisin de 0,4 mm.

Le noyau central de la structure en étoile est de 5 mm de diamètre extérieur.

Lors de la réalisation, la précision de dimensionnement sera de l'ordre de 10 µm, mais l'identité des six bras sera réalisée à 1 µm près ou moins.

Avec ces dimensions, les caractéristiques de fonctionnement d'un résonateur en quartz sont les suivantes :

- fréquence propre des bras en flexion : 13 à 14 kHz ;
- bande passante supérieure à 50 Hz ;
- tension d'excitation : de 5 à 20 Volts ;
- facteur d'échelle K de l'ordre de 1 mV.s/degré ou 30 à 50 pA/°/s ;
- tenue aux accélérations linéiques : supérieures à 104 g ;
- volume total (incluant l'électronique) : quelques $cm^3$.

Le gyromètre conforme à l'invention présente de nombreux avantages. Outre sa grande stabilité en performances, il est compact et robuste et présente un prix de fabrication réduit.

De nombreuses applications sont envisageables pour ce gyromètre.

En particulier, il est avantageusement utilisé dans des centrales inertielles miniatures, pour le guidage et la navigation à court terme.

Il peut également être utilisé pour réaliser des stabilisations, par exemple de lignes de visée ou d'antennes.

Egalement encore, il peut être intégré à des bras manipulateurs de robots, des suspensions d'automobiles, etc...

**EP 0 773 429 B1**

**Revendications**

1. Gyromètre comportant un résonateur mécanique (1) présentant une pluralité de bras (2) s'étendant de façon coplanaire à partir d'un élément commun (3, 10a,10b), des moyens (4) pour l'excitation selon un mode primaire des bras (2) selon des vibrations en flexion perpendiculaires au plan de ce résonateur, des moyens (5,12,13) pour la détection des vibrations secondaires en flexion engendrées par effet Coriolis sur les bras (2) de ce résonateur dans le plan de celui-ci, ainsi que des moyens de traitement (21,T) recevant des signaux de mesure ($M_1$,$M_2$,$M_3$) en sortie des moyens de détection (5) et déterminant en fonction de ces mesures des composantes ($\Omega x$, $\Omega y$) dans le plan du résonateur (1) de la vitesse de rotation ($\Omega$) du résonateur (1), caractérisé en ce que ledit résonateur comporte au moins six bras (2) répartis en étoile selon au moins trois directions.

2. Gyromètre selon la revendication 1, caractérisé en ce que les moyens de traitements (21,T) comportent des moyens pour combiner linéairement les mesures en sortie des moyens de détection (5,12,13) et traiter la combinaison linéaire ainsi obtenue pour délivrer un signal (Ve) de contrôle du fonctionnement du gyromètre.

3. Gyromètre selon la revendication 2, caractérisé en ce que les moyens de traitement (21,T) délivrent un signal (Ve) de contrôle de fonctionnement qui est la somme des mesures en sortie des moyens de détection (5,12,13).

4. Gyromètre selon l'une des revendications précédentes, caractérisé en ce que le résonateur mécanique (1) est monolithique et est en un matériau monocristallin intrinsèquement piézo-électrique.

5. Gyromètre selon l'une des revendications précédentes, caractérisé en ce que les bras (2) s'étendent radialement à partir d'un noyau central (3) que comprend l'élément commun.

6. Gyromètre selon la revendication 5, caractérisé en ce que l'élément commun comporte en outre plusieurs poutres (10a) qui s'étendent à partir du noyau (3), dans le plan du résonateur (1), jusqu'à une structure de fixation (10b) qui entoure les bras (2) et le noyau (3).

7. Gyromètre selon la revendication 6, caractérisé en ce que cette structure de fixation (10b) est d'une pièce avec les poutres (10a), le noyau (3) et les bras (2).

8. Gyromètre selon l'une des revendications précédentes, caractérisé en ce que les moyens d'excitation comportent des moyens pour exciter un ou certains des bras (2a) du résonateur, les vibrations primaires sur les autres bras (2b) étant générées à partir de l'excitation que réalisent ces moyens par le couplage mécanique des différents bras (2) du résonateur (1) entre eux.

9. Gyromètre selon l'une des revendications précédentes, caractérisé en ce que le résonateur comporte un nombre de bras (2) pair, deux bras (2) adjacents étant excités de façon qu'ils vibrent en opposition de phase.

10. Gyromètre selon la revendication 9, caractérisé en ce que le résonateur est en un matériau à symétrie d'ordre n, où est n est un entier supérieur ou égal à 3 et comporte un nombre de bras multiple de n.

11. Gyromètre selon la revendication 10, caractérisé en ce que le résonateur (1) est en un matériau à symétrie ternaire, tel que le quartz.

12. Gyromètre selon la revendication 11, caractérisé en ce que le résonateur comporte un nombre de bras égal ou multiple de six.

13. Gyromètre selon les revendications 5 et 11 prises en combinaison, caractérisé en ce que le noyau (3) est avantageusement de forme hexagonale.

14. Gyromètre selon la revendication 6 prise en combinaison avec l'une des revendications 11 à 13, caractérisé en ce que la structure de fixation (10a, 10b), est de forme hexagonale.

15. Gyromètre selon l'une des revendications précédentes, caractérisé en ce que les moyens de traitement (T) comportent des moyens pour réaliser des opérations sur les mesures (M1, M2, M3) en sortie des moyens de détection (5), dont le résultat correspond aux composantes ($\Omega x$, $\Omega y$) de la vitesse de rotation ($\Omega$) dans le plan du résonateur (1).

**16.** Gyromètre selon les revendications 6 à 7 prises seules ou en combinaison avec l'une des revendications 7 à 15, caractérisé en ce que la structure de fixation (10b) est pincée entre des saillies (16a, 16b) que présentent deux plaques (17a, 17b) disposées de part et d'autre du résonateur (1).

**17.** Gyromètre selon l'une des revendications précédentes, caractérisé en ce que l'élément commun est pincé entre deux couches (9a) en un matériau élastiquement déformable.

**18.** Gyromètre selon l'une des revendications 1 à 15, caractérisé en ce qu'il comporte un pied de fixation dont l'élément commun (3) est rigidement solidaire, ce pied permettant la fixation du résonateur mécanique (1) sur un mobile (M).

**19.** Gyromètre selon l'une des revendications précédentes, caractérisé en ce que les bras (2) sont de section sensiblement carrée.

**20.** Gyromètre selon l'une des revendications précédentes, caractérisé en ce qu'il comporte un boîtier (7) dans lequel le résonateur (1) est disposé avec au moins une partie des moyens de traitement (T).

**21.** Gyromètre selon l'une des revendications précédentes, caractérisé en ce que les bras (2) présentent des masselottes d'équilibrage.

**22.** Gyromètre selon la revendication 11 prise seule ou en combinaison avec l'une des revendications 12 à 21, caractérisé en ce que l'axe optique (Z1) du cristal est perpendiculaire au plan du résonateur (1), ses axes électriques (X1) étant perpendiculaires aux directions (Y1) selon lesquelles les bras (2) s'étendent.

**23.** Gyromètre selon l'une des revendications précédentes, caractérisé en ce que les moyens d'excitation et de détection comprennent des électrodes (4, 5) disposées sur les faces des bras (2) qui sont parallèles au plan du résonateur (1).

**24.** Gyromètre selon les revendications 22 et 23, caractérisé en ce que les moyens de détection comprennent au moins trois électrodes de détection (5) qui s'étendent parallèlement sur une portion dans la longueur d'un bras (2), en étant juxtaposées dans la largeur de celui-ci, sur une de ses faces parallèle au plan du résonateur, lesdits moyens de détection comportant en outre des moyens pour mesurer les tensions entre celle de ces électrodes qui sont latérales et l'électrode centrale.

**25.** Gyromètre selon les revendications 22 et 23 ou 24, caractérisé en ce que les moyens d'excitation comportent au moins deux électrodes (4) qui s'étendent parallèlement dans la longueur d'un bras (2), sur une face de celui-ci parallèle au plan du résonateur (1), ainsi que des moyens pour appliquer une tension d'excitation entre ces deux électrodes.

**26.** Gyromètre selon la revendication 22, caractérisé en ce que la section d'un bras (2) étant sensiblement carrée, les moyens de détection comportent sur ce bras au moins quatre électrodes (5) portées chacune par l'une des faces dudit bras (2), lesdits moyens de détection comportant en outre des moyens pour mesurer des tensions entre celles de ces électrodes (5) qui sont sur les faces du bras (2) parallèles au plan du résonateur (1) et celles de ces électrodes (5) qui sont sur des faces perpendiculaires.

**27.** Gyromètre selon la revendication 22 prise seule ou en combinaison avec la revendication 26, caractérisé en ce que les moyens d'excitation comportent au moins deux électrodes (4) portées par deux faces en regard et perpendiculaires au plan du résonateur (1), ainsi que des moyens pour appliquer une tension d'excitation entre ces électrodes (4).

**28.** Gyromètre selon l'une des revendications précédentes, caractérisé en ce que les moyens de détection comportent des électrodes (5) disposées à proximité immédiate de l'encastrement d'un bras (2) qui les porte sur l'élément commun (3) à partir duquel ledit bras s'étend.

**29.** Gyromètre selon la revendication 7 prise seule ou en combinaison avec l'une des revendications 8 à 28, caractérisé en ce qu'une électrode d'excitation ou de détection s'étend sur sensiblement toute la longueur d'un bras.

**30.** Gyromètre selon l'une des revendications précédentes, caractérisé en ce que le résonateur (1) présente des pistes métallisées qui servent à la liaison entre des électrodes (4, 5) des moyens d'excitation et/ou de détection et les moyens de traitement (21).

**Patentansprüche**

1. Gyrometer mit einem mechanischen Resonator (1), der mehrere Arme (2) aufweist, die ausgehend von einem gemeinsamen Element (3, 10a, 10b) koplanar verlaufen, Einrichtungen (4) zum Anregen der Arme (2) in einer primären Schwingungsart zu Biegeschwingungen senkrecht zur Ebene des Resonators, Einrichtungen (5, 12, 13) zum Erfassen von sekundären Biegeschwingungen, die durch die Wirkung einer Corioliskraft auf die Arme (2) des Resonators in seiner Ebene entstehen, sowie Verarbeitungseinrichtungen (21, T), die die Meßsignale ($M_1$, $M_2$, $M_3$) am Ausgang der Erfassungseinrichtung (5) empfangen und in Abhängigkeit von diesen Meßwerten die Anteile ($\Omega x$, $\Omega y$) in der Ebene des Resonators (1) der Winkelgeschwindigkeit ($\Omega$) des Resonators (1) bestimmen, dadurch gekennzeichent, daß der besagte Resonator wenigstens sechs Arme (2) aufweist, die sternförmig in wenigstens drei Richtungen verteilt sind.

2. Gyrometer nach Anspruch 1, dadurch gekennzeichnet, daß die Verarbeitungseinrichtungen (21, T) Einrichtungen zum linearen Kombinieren der Meßwerte am Ausgang der Erfassungseinrichtungen (5, 12, 13) und zum Verarbeiten der in dieser Weise erhalten linearen Kombination umfassen, um ein Signal (Ve) zum Überwachen der Funktion des Gyrometers abzugeben.

3. Gyrometer nach Anspruch 2, dadurch gekennzeichnet, daß die Verarbeitungseinrichtungen (21, T) ein Signal (Ve) zum Überwachen der Funktion abgeben, das gleich der Summe der Meßwerte am Ausgang der Erfassungseinrichtungen (5, 12, 13) ist.

4. Gyrometer nach einem der vorhergehenden Ansprüche, dadurch gekennzeichnet, daß der mechanische Resonator (1) monolitisch ist und aus einem einkristallinen eigenpiezoelektrischen Material besteht.

5. Gyrometer nach einem der vorhergehenden Ansprüche, dadurch gekennzeichnet, daß die Arme (2) radial von einem zentralen Kern (3) ausgehen, der das gemeinsame Element umfaßt.

6. Gyrometer nach Anspruch 5, dadurch gekennzeichnet, daß das gemeinsame Element weiterhin mehrere Träger (10a) aufweist, die ausgehend vom Kern (3) in der Ebene des Resonators (1) bis zu einer Befestigungskonstruktion (10b) verlaufen, die die Arme (2) und den Kern (3) umgibt.

7. Gyrometer nach Anspruch 6, dadurch gekennzeichnet, daß diese Befestigungskonstruktion (10b) in einem Stück mit den Trägern (10a), dem Kern (3) und den Armen (2) ausgebildet ist.

8. Gyrometer nach einem der vorhergehenden Ansprüche, dadurch gekennzeichnet, daß die Anregungseinrichtungen Einrichtungen zum Anregen eines oder mehrerer Arme (2a) des Resonators umfassen, wobei die primären Schwingungen an den anderen Armen (2b) ausgehend von der Anregung erzeugt werden, die von diesen Einrichtungen über eine mechanische Kopplung der verschiedenen Arme (2) des Resonators (1) untereinander verwirklicht wird.

9. Gyrometer nach einem der vorhergehenden Ansprüche, dadurch gekennzeichnet, daß der Resonator eine geradzahlige Anzahl von Armen (2) hat, wobei zwei benachbarte Arme (2) so angeregt werden, daß sie mit entgegengesetzten Phasen schwingen.

10. Gyrometer nach Anspruch 9, dadurch gekennzeichnet, daß der Resonator aus einem Material mit n-zähliger Symmetrie besteht, wobei n eine ganze Zahl größer oder gleich 3 ist, und eine Anzahl von Armen aufweist, die gleich einem Vielfachen von n ist.

11. Gyrometer nach Anspruch 10, dadurch gekennzeichnet, daß der Resonator (1) aus einem Material mit dreizähliger Symmetrie wie beispielweise Quarz besteht.

12. Gyrometer nach Anspruch 11, dadurch gekennzeichnet, daß der Resonator eine Anzahl von Armen gleich 6 oder einem Vielfachen von 6 aufweist.

13. Gyrometer nach den Ansprüchen 5 und 11 in Kombination, dadurch gekennzeichnet, daß der Kern (3) in vorteilhafter Weise eine hexagonale Form hat.

**14.** Gyrometer nach Anspruch 6 in Kombination mit einem der Ansprüche 11 bis 13, dadurch gekennzeichnet, daß die Befestigungskonstruktion (10a, 10b) eine hexagonale Form hat.

**15.** Gyrometer nach einem der vorhergehenden Ansprüche, dadurch gekennzeichnet, daß die Verarbeitungseinrichtungen (T) Einrichtungen zum Ausführen von Operationen an den Meßwerten (M, $M_2$, $M_3$) am Ausgang der Erfassungseinrichtungen (5) umfassen, deren Resultat den Anteilen ($\Omega x'$, $\Omega y$) der Winkelgeschwindigkeit ($\Omega$) in der Ebene des Resonators (1) entspricht.

**16.** Gyrometer nach den Ansprüchen 6 bis 7, einzeln oder in Kombination mit einem der Ansprüche 7 bis 15, dadurch gekennzeichnet, daß die Befestigungskonstruktion (10b) zwischen Vorsprüngen (16a, 16b) eingeklemmt ist, die an zwei Platten (17a, 17b) vorgesehen sind, die auf beiden Resonatoren (1) jeweils angeordnet sind.

**17.** Gyrometer nach einem der vorhergehenden Ansprüche, dadurch gekennzeichnet, daß das gemeinsame Element zwischen zwei Auflagen (9a) aus einem elastisch verformbaren Material eingeklemmt ist.

**18.** Gyrometer nach einem der Ansprüche 1 bis 15, dadurch gekennzeichnet, daß es einen Befestigungsfuß umfaßt, dessen gemeinsames Element (3) insgesamt starr ist, welcher Fuß eine Befestigung des mechanischen Resonators (1) an einem beweglichen Körper (M) erlaubt.

**19.** Gyrometer nach einem der vorhergehenden Ansprüche, dadurch gekennzeichnet, daß die Arme (2) einen im Wesentlichen viereckigen Querschnitt haben.

**20.** Gyrometer nach einem der vorhergehenden Ansprüche, dadurch gekennzeichnet, daß es ein Gehäuse (7) aufweist, in dem der Resonator (1) mit wenigstens einem Teil der Verarbeitungseinrichtungen (T) angeordnet ist.

**21.** Gyrometer nach einem der vorhergehenden Ansprüche, dadurch gekennzeichnet, daß die Arme (2) Ausgleichsgewichte aufweisen.

**22.** Gyrometer nach Anspruch 11, allein oder in Kombination mit einem Ansprüche 12 bis 21, dadurch gekennzeichnet, daß die optische Achse (Z1) des Kristalls senkrecht zur Ebene des Resonators (1) verläuft, wobei seine elektrischen Achsen (X1) senkrecht zu den Richtungen (Y1) liegen, in die sich die Arme (2) erstrecken.

**23.** Gyrometer nach einem der vorhergehenden Ansprüche, dadurch gekennzeichnet, daß die Anregungseinrichtungen und die Erfassungseinrichtungen Elektroden (4, 5) aufweisen, die auf den Oberflächen der Arme (2) angeordnet sind, die parallel zur Ebenen des Resonators (1) verlaufen.

**24.** Gyrometer nach den Ansprüchen 22 und 23, dadurch gekennzeichnet, daß die Erfassungseinrichtungen wenigstens drei Erfassungselektroden (5) aufweisen, die parallel über einen Teil der Länge eines Armes (2) in dessen Breite nebeneinander liegend auf einer seiner Flächen parallel zur Ebene des Resonators verlaufen, welche Erfassungseinrichtungen weiterhin Einrichtungen zum Messen der Spannungen zwischen den Elektroden, die seitlich liegen, und der mittleren Elektrode umfassen.

**25.** Gyrometer nach den Ansprüchen 22 und 23 oder 24, dadurch gekennzeichnet, daß die Anregungseinrichtungen wenigstens zwei Elektroden (4), die parallel über die Länge eines Armes (2) auf seiner Oberfläche parallel zur Ebene des Resonators (1) verlaufen, sowie Einrichtungen zum Anlegen einer Anregungsspannung zwischen die beiden Elektroden umfassen.

**26.** Gyrometer nach den Anspruch 22, dadurch gekennzeichnet, daß der Querschnitt eines Armes (2) im Wesentlichen viereckig, die Erfassungseinrichtungen auf dem Arm wenigstens vier Elektroden (5) umfassen, die jeweils von einer der Oberflächen des Armes (2) getragen sind, die Erfassungseinrichtungen weiterhin Einrichtungen zum Messen der Spannungen zwischen denjenigen Elektroden (5), die sich auf den Außenflächen des Armes (2) parallel zur Ebene des Resonators (1) befinden, und denjenigen Elektroden (5) umfassen, die sich auf dazu senkrechten Flächen befinden.

**27.** Gyrometer nach Anspruch 22, allein oder in Kombination mit Anspruch 26, dadurch gekennzeichnet, daß die Anregungseinrichtungen wenigstens zwei Elektroden (4), die von zwei Außenflächen senkrecht zur Ebene des Re-

**EP 0 773 429 B1**

sonators (1) und der Ebene des Resonators (1) gegenüberstehend gehalten sind, sowie Einrichtungen zum Anlegen einer Anregungspannung zwischen diese Elektroden (4) umfassen.

28. Gyrometer nach einem der vorhergehenden Ansprüche, dadurch gekennzeichnet, daß die Erfassungseinrichtungen Elektroden (5) umfassen, die in unmittelbarer Nähe der Einbindung eines Armes (2) angeordnet sind, die diesen am gemeinsamen Element (3) hält, von dem dieser Arm ausgeht.

29. Gyrometer nach Anspruch 7, allein oder in Kombination mit einem der Ansprüche 8 bis 28, dadurch gekennzeichnet, daß eine Anregungs- oder Erfassungselektrode im Wesentlichen über die gesamte Länge eines Armes verläuft.

30. Gyrometer nach einem der vorhergehenden Ansprüche, dadurch gekennzeichnet, daß der Resonator (1) metallisierte Bahnen aufweist, die als Verbindung zwischen den Elektroden (4, 5) der Anregungs- und/oder Erfassungseinrichtungen und der Verarbeitungseinrichtungen (21) dienen.

**Claims**

1. A rate gyro including a mechanical resonator (1) having a plurality of arms (2) extending in coplanar manner from a common element (3, 10a, 10b), exciter means (4) for exciting the arms (2) to vibrate in a primary mode of bending vibrations perpendicular to the plane of the resonator, detector means (5, 12, 13) for detecting bending vibrations generated by the Coriolis effect on the arms (2) of the resonator in the plane thereof, and also processing means (21, T) receiving measurement signals (M1, M2, M3) output by the detector means (5) and determining the com-ponents ($\Omega x$, $\Omega y$) in the plane of the resonator (1) of the rotary velocity ($\Omega$) of the resonator (1) as a function of said measurements, the gyro being characterized in that said resonator includes at least six arms (2) distributed in a star configuration along at least three directions.

2. A gyro according to claim 1, characterized in that the processing means (21, T) include means for making a linear combination of the output measurements from the detector means (5, 12, 13) and for processing the resulting linear combination to deliver a signal (Ve) that monitors operation of the gyro.

3. A gyro according to claim 2, characterized in that the processing means (21, T) deliver a signal (16) monitoring operation that is the sum of the output measurements from the detector means (5, 12, 13).

4. A gyro according to any preceding claim, characterized in that the mechanical resonator (1) is monolithic and is made of a monocrystalline material that is intrinsically piezoelectric.

5. A gyro according to any preceding claim, characterized in that the arms (2) extend radially from a central core (3) comprised in the common element.

6. A gyro according to claim 5, characterized in that the common element further includes a plurality of beams (10a) extending from the core (3) in the plane of the resonator (1) to a fixing structure (10b) which surrounds the arms (2) and the core (3).

7. A gyro according to claim 6, characterized in that said fixing structure (10b) is integral with the beams (10a), the core (3) and the arms (2).

8. A gyro according to any preceding claim, characterized in that the exciter means include means for exciting one or some of the arms (2a) of the resonator, with the primary vibrations of the other arms (2b) being derived from the excitation implemented by said means by mechanical coupling between the various arms (2) of the resonator (1).

9. A gyro according to any preceding claim, characterized in that the resonator includes an even number of arms (2), two adjacent arms (2) being excited to operate in phase opposition.

10. A gyro according to claim 9, characterized in that the resonator (1) is made of a material having symmetry of order $n$, where $n$ is an integer superior or equal to 3, and comprises a number of arms which is a multiple of $n$.

11. A gyro according to claim 10, characterized in that the resonator (1) is made of a material having ternary symmetry, such as quartz.

12. A gyro according to claim 11, characterized in that the resonator includes a number of arms that is equal to six or to a multiple thereof.

13. A gyro according to claims 5 and 11 in combination, characterized in that the core (3) is advantageously hexagonal in shape.

14. A gyro according to claim 6 taken in combination with any one of claims 11 to 13, characterized in that the fixing structure (10a, 10b) is hexagonal in shape.

15. A gyro according to any preceding claim, characterized in that the processing means (T) include means for performing operations on the output measurements (M1, M2, M3) from the detector means (5), giving a result that corresponds to the components ($\Omega x$, $\Omega y$) of the rotary velocity ($\Omega$) in the plane of the resonator (1).

16. A gyro according to claims 6 to 7 on their own or in combination with any one of claims 7 to 15, characterized in that the fixing structure (10b) is clamped between projections (16a, 16b) on two plates (17a, 17b) disposed on either side of the resonator (1).

17. A gyro according to any preceding claim, characterized in that the common element is clamped between two layers (9a) of elastically deformable material.

18. A gyro according to any one of claims 1 to 15, characterized in that it includes a fixing member with which the common element (3) is rigidly secured, said member enabling the mechanical resonator (1) to be fixed to a moving body (M).

19. A gyro according to any preceding claim, characterized in that the arms (2) are substantially square in section.

20. A gyro according to any preceding claim, characterized in that it includes a housing (7) in which the resonator (1) is disposed together with at least a portion of the processing means (T).

21. A gyro according to any preceding claim, characterized in that its arms (2) include balancing masses.

22. A gyro according to claim 11 on its own or in combination with any one of claims 12 to 21, characterized in that the optical axis (Z1) of the crystal is perpendicular to the plane of the resonator (1), its electrical axes (X1) being perpendicular to the directions (Y1) in which the arms (2) extend.

23. A gyro according to any preceding claim, in which the exciter means and the detector means comprise electrodes (4, 5) disposed on those faces of the arms (2) that are parallel to the plane of the resonator (1).

24. A gyro according to claims 22 and 23, characterized in that the detector means comprise at least three detector electrodes (5) on a face of an arm (2) that is parallel to the plane of the resonator, which electrodes extend parallel over a fraction of the length of the arm (2), being juxtaposed across the width thereof, said detector means further including means for measuring the voltages between the central electrode and the electrodes on either side thereof.

25. A gyro according to claims 22 and 23 or 24, characterized in that the exciter means includes at least two electrodes (4) extending parallel in the length direction of an arm (2) on a face thereof parallel to the plane of the resonator (1), together with means for applying an excitation voltage between said two electrodes.

26. A gyro according to claim 22, characterized in that for an arm (2) of substantially square section, the detector means on said arm include at least four electrodes (5) each carried on one of the faces of said arm (2), said detector means further including means for measuring voltages between those of said electrodes (5) which are on the faces of the arm (2) parallel to the plane of the resonator (1) and those of said electrodes (5) which are on faces perpendicular thereto.

27. A gyro according to claim 22 on its own or in combination with claim 26, characterized in that the exciter means include at least two electrodes (4) carried by two facing faces perpendicular to the plane of the resonator (1), together with means for applying an excitation voltage between said electrodes (4).

28. A gyro according to any preceding claim, characterized in that the detector means include electrodes (5) disposed in the immediate vicinity of the connection of an arm (2) carrying them and the common element (3) from which said arm extends.

29. A gyro according to claim 7 on its own or in combination with any one of claims 8 to 28, characterized in that an exciter electrode or a detector electrode extends over substantially the entire length of an arm.

30. A gyro according to any preceding claim, characterized in that the resonator (1) has metal tracks to provide connections between the processing means (21) and the electrodes (4, 5) of the exciter and/or detector means.

FIG_1

FIG_2

FIG.3a

FIG.3b

FIG.4a

FIG.4b

FIG.4c

FIG.5a

FIG.5b

$i = k.\Omega$

FIG.6

FIG_7a

FIG_7b

FIG.8

FIG_9

EP 0 773 429 B1

EP 0 773 429 B1

FIG_10

FIG_11

21

FIG.12

EP 0 773 429 B1

$\overrightarrow{x1}$
$\overrightarrow{y1}$
$\overrightarrow{z1}$

2a
2b
10a
10b
10a
10a
2
3

FIG_13

VP
2a
2b
VP

FIG_14a

2a
2b
VS
Ω
VS

FIG_14b

FIG.15